# EUROPEAN PATENT SPECIFICATION

(11) **EP 3 283 364 B1**
(45) Date of publication and mention of the grant of the patent: **22.07.2020**
(21) Application number: 16780474.9
(22) Date of filing: 06.04.2016
(51) Int. Cl.: B63B 59/02, B63B 21/00, G05B 19/02, G01C 21/00

(54) **ENHANCED SYSTEM AND METHOD FOR DETANGLING AND PROTECTION OF AUTOMATIC FENDER POSITIONING SYSTEMS**
ERWEITERTES SYSTEM UND VERFAHREN FÜR ENTWIRRUNG UND SCHUTZ VON AUTOMATISCHEN KOTFLÜGELPOSITIONIERUNGSSYSTEMEN
SYSTÈME ET PROCÉDÉ AMÉLIORÉS PERMETTANT DE DÉMÊLER ET DE PROTÉGER DES SYSTÈMES DE POSITIONNEMENT DE DÉFENSE AUTOMATIQUES

(30) Priority: 16.04.2015 US 201562148725 P; 27.04.2015 US 201562153193 P; 27.04.2015 US 201562153185 P; 06.05.2015 US 201562157857 P; 22.05.2015 US 201562165798 P; 02.08.2015 US 201562200089 P; 01.11.2015 US 201514929369; 28.12.2015 US 201514981858; 25.02.2016 US 201615054125
(43) Date of publication of application: 21.02.2018
(73) Proprietor: Arditi, Shmuel, Sam, Discovery Bay, CA 94505 (US)
(72) Inventor: Arditi, Shmuel, Sam, Discovery Bay, CA 94505 (US)
(74) Representative: Humphrey-Evans, Edward John
(86) International application number: PCT/US2016/026271
(87) International publication number: WO 2016/168025

(56) References cited:
- EP-A1- 1 277 651
- WO-A1-2007/021169
- GB-A- 2 381 845
- JP-A- S5 679 074
- SU-A1- 1 054 189
- US-A- 4 970 980
- US-A1- 2010 070 118
- US-B1- 6 758 155

## Description

### Field of the Invention

The disclosure relates to the field of boating, and more particularly to the field of deploying protective fenders for use in docking a boat.

### Discussion of the State of the Art

Boating, in a motorized or sail-powered craft, is both a popular recreational activity and the foundation of the seafood industry. The operator of the craft must be able to navigate it safely and also to dock it safely, whether at a stationary, land-based dock, next to another boat, or at some other, similar large adjacent object (any and all of which are hereinafter referred to as a "dock"). In cases of stormy weather or large waves, deploying and positioning the protective boat fenders to keep the boat from violently hitting a dock can be tricky and dangerous.

What is needed is a system and method that enables a boat operator to safely and conveniently deploy boat fenders when needed. What is additionally needed is a way to extend and retract boat fender into and out of protective stowage enclosures from locations remote from the placement of at least some of those fenders, for added safety and convenience. Further needed in other cases is a way to extend and retract boat fenders using a motor-driven mechanism, for even greater added safety and convenience. Further needed is a system and method enabling a user to control these fenders from a mobile computing device, such as a smartphone or tablet. Additionally needed is a system and method to alert the user to deploy the boat's fenders when the boat is on a trajectory that leads to a previously visited dock and, in some cases, to deploy the fenders automatically, all based upon a global positioning system (GPS) location of the boat. US497980 relates to an inflatable bumper system for a watercraft in which one or more bumper modules are installed on the sides of the watercraft and selected ones of such modules can be inflated upon operator command. US6758155 relates to a fender retrieval system, which is operable to deploy fenders by remote control.

### SUMMARY OF THE INVENTION

The inventor has conceived and reduced to practice, in a preferred embodiment of the invention, an enhanced system and various methods for remotely deploying boat fenders.

According to a preferred embodiment of the invention, there is provided a system for automatically deploying at least one boat fender to protect a boat's hull in accordance with claim 1.

In another preferred embodiment, the fender is attached to the line, the line coupled to a winch, the winch coupled to a motor, and the motor controlled by a controller, wherein the controller is activated via wireline or wireless control signals. Here, the controller may be controlling more than one receptacle. The winch may draw its power from a battery, where the battery is the onboard power supply or the battery is separate and recharged by a solar panel coupled to the battery. Each receptacle may have its individual controller, battery and solar panel, arranged so as not to require any wiring between the units.

The receptacle may be mounted with at least one hinge to a stationary part of the boat within the boat's outline, the hinge operable to allow the receptacle to swing out from the boat's outline, for easy deployment of the fender. Deployment of the receptacle may be controlled for the swing-out with a lever, the lever attached to a second stationary part of the boat, the lever being used to initiate and stop or reverse the swing-out action. The lever may also be a hinged arm and may be operated manually or operated with an additional motor.

Alternately, the receptacle may be mounted on at least one stationary part of the boat, substantially within the boat's outline, the receptacle having an angle for enabling the fender to be lowered through an opening in the railing over the edge of the boat's board and have an additional slide extension at the bottom opening, the extension guiding the fender over the edge of the boat.

According to yet another embodiment of the invention, an application on a smart phone, the application having access to a map system and also optionally having access to a GPS system of the smartphone, wherein the application may be used by a user to add locations used by a vessel for landing, and the user may enter a mark representing a height of fenders to be deployed. The system may then remember the decision of the user whether or not and how to deploy the fenders, or whether no preset action is desired.

According to a further embodiment of the system there is provided a receptacle for stowing a boat fender, the receptacle being attached to a vessel, the receptacle having an opening for threading through a line, the line being attached to the fender, the line operable to pull up the fender into the receptacle through a second opening in the receptacle and where a moveable bar exists within the receptacle across its opening above the fender, the bar having an opening for guiding the line, which passes through it, the bar moveable along the cylindrical axis of the receptacle. Optionally, the bar is pulled up along with the fender into the receptacle; the line may be routed inside the receptacle and exit from the same opening as the fender or exit from any point along a length of the receptacle. The receptacle can have at least one moveable hinged section, the section formed in such a manner, that when the fender is pulled up into the top of the receptacle, the movable section clamps in on the fender and secures it within the receptacle.

According to yet another embodiment of the invention there is provided a system with a receptacle for stowing a boat fender, the receptacle attached to a vessel, the receptacle having an opening for threading through a line, the line being attached to the fender and passing through a movable bar comprising at least a cross-member spanning the interior of the receptacle and having an opening for allowing the line to pass through and configured to move freely along at least a vertical axis of the receptacle, the line connected at one end to a motor operable to pull up the fender into the receptacle, the movement of the line being directed at least in part by the movable bar, and where upon retracting the fender, the motor will shut down if a disturbance in the retraction motion is recognized by one or more cameras in conjunction with visual recognition software. Upon shutdown of the motor, the system seeks to attempt to detangle the line and achieve a full retraction, the detangling comprising at least a number of reversals of line movement. Current control can be used to aid the detangling control of the reversal of the line motion in addition to the camera.

The system may be provided with a preset time limit, wherein after exceeding a preset time limit, further attempts to detangle or retrieve are aborted in order to protect the components of the system: an alert can be provided to an operator. A plurality of end switches that detect when the movable bar is fully retracted. An end switch can be of a type drawn from a set comprising: a mechanical switch, a magnetic switch, an RFID proximity switch, or an electrical switch.

Finally, the enclosure may contain a camera looking outward from the boat, the camera supplied power by the same system that operates the fender, and the camera coupled to provide a video stream on request to one of the controlling computing devices, allowing a person to better see when approaching the docking location.

### BRIEF DESCRIPTION OF THE DRAWING FIGURES

The accompanying drawings illustrate several embodiments of the invention and, together with the description, serve to explain the principles of the invention according to the embodiments. One skilled in the art will recognize that the particular embodiments illustrated in the drawings are merely exemplary, and are not intended to limit the scope of the present invention.
**Fig. 1** **(PRIOR ART)** is an illustration of a typical pleasure boat, illustrating how fenders are normally hung on a boat's railings.
**Fig. 2** shows an exemplary representation of an installation of manually-deployed boat fenders.
**Fig. 3** shows an exemplary representation of a fender stowage receptacle.
**Fig. 4** shows an exemplary representation of a pulley and remote cleat mechanism for the safe and convenient stowage and deployment of boat fenders.
**Fig. 5** shows an exemplary representation of a user reminder app for boat fender deployment according to a preferred embodiment of the invention.
**Fig. 6** shows an exemplary representation of the connection of four receptacle and fender mechanisms connected by wires to a solar panel according to a preferred embodiment of the invention.
**Fig. 7** is a diagram of an exemplary solar panel assembly connected to a receptacle and fender mechanism according to a preferred embodiment of the invention.
**Fig. 8** is a diagram of an exemplary controller for the deployment and retraction of fenders according to a preferred embodiment of the invention.
**Fig. 9** is an exemplary diagram of a computer system as may be used in the system and methods disclosed herein.
**Fig. 10** is an exemplary diagram of a wireless control system for deployment an retraction of boat fenders as per a preferred embodiment of the invention.
**Fig. 11** shows a representation of an exemplary system application screen depicting a boat approaching a dock in a harbor, according to a preferred embodiment of the invention.
**Fig. 12** shows an application screen that is exemplary of additional application functionality according to a preferred embodiment of the invention.
**Fig. 13** shows an exemplary application screen that may open when a user has deployed boat fenders according to a preferred embodiment of the invention.
**Fig. 14** shows an exemplary representation of a boat prow where the receptacle is mounted on one or more hinges according to a preferred embodiment of the invention.
**Fig. 15** shows an exemplary cross section of a boat with a representative receptacle secured by mounting hinges and a chute that aids in deployment according to a preferred embodiment of the invention.
**Fig. 16** shows a diagram of an alternative method to recess the receptacle according to a preferred embodiment of the invention.
**Fig. 17** shows an exemplary representation of an enhanced boat fender receptacle according to a preferred embodiment of the invention.
**Fig. 18** shows an exemplary fender deployment reminder pop-up screen according to a preferred embodiment of the invention.
**Fig. 19** shows a screenshot in which the system prompts the user whether to remember the decision.
**Fig. 20** shows an exemplary representation of two alternative methods for protecting a boat motor and electronic circuitry from overload due to problems with raising a boat fender.
**Fig. 21** shows an exemplary representation of an approach for viewing entanglements or other problems preventing a boat fender from being fully raised.
**Fig. 22** shows a process for resolving problems with raising a fender.
**Fig. 23** shows a pair of embodiments with elastic members to mitigate forces transmitted from a fender to a mechanism of the invention.

### DETAILED DESCRIPTION

The inventor has conceived, and reduced to practice, an enhanced system and method for remotely deploying boat fenders.

One or more different inventions may be described in the present application. Further, for one or more of the inventions described herein, numerous alternative embodiments may be described; it should be understood that these are presented for illustrative purposes only. The described embodiments are not intended to be limiting in any sense. One or more of the inventions may be widely applicable to numerous embodiments, as is readily apparent from the disclosure. In general, embodiments are described in sufficient detail to enable those skilled in the art to practice one or more of the inventions, and it is to be understood that other embodiments may be utilized and that structural, logical, software, electrical and other changes may be made without departing from the scope of the particular inventions. Accordingly, those skilled in the art will recognize that one or more of the inventions may be practiced with various modifications and alterations. Particular features of one or more of the inventions may be described with reference to one or more particular embodiments or figures that form a part of the present disclosure, and in which are shown, by way of illustration, specific embodiments of one or more of the inventions. It should be understood, however, that such features are not limited to usage in the one or more particular embodiments or figures with reference to which they are described. The present disclosure is neither a literal description of all embodiments of one or more of the inventions nor a listing of features of one or more of the inventions that must be present in all embodiments.

Headings of sections provided in this patent application and the title of this patent application are for convenience only, and are not to be taken as limiting the disclosure in any way.

Devices that are in connection with each other need not be continuously connected with each other, unless expressly specified otherwise. In addition, devices that are in connection with each other may connect directly or indirectly through one or more intermediaries, logical or physical.

A description of an embodiment with several components in connection with each other does not imply that all such components are required. To the contrary, a variety of optional components may be described to illustrate a wide variety of possible embodiments of one or more of the inventions and in order to more fully illustrate one or more aspects of the inventions. Similarly, although process steps, method steps, algorithms or the like may be described in a sequential order, such processes, methods and algorithms may generally also work in alternate orders, unless specifically stated to the contrary. In other words, any sequence or order of steps that may be described in this patent application does not, in and of itself, indicate a requirement that the steps be performed in that order. The steps of described processes may be performed in any order practical. Further, some steps may be performed simultaneously despite being described or implied as occurring sequentially (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the invention(s), and does not imply that the illustrated process is preferred. Also, steps are generally described once per embodiment, but this does not mean they must occur once, or that they may only occur once each time a process, method, or algorithm is carried out or executed. Some steps may be omitted in some embodiments or some occurrences, or some steps may be executed more than once in a given embodiment or occurrence.

When a single device or article is described, it will be readily apparent that more than one device or article may be used in place of a single device or article. Similarly, where more than one device or article is described, it will be readily apparent that a single device or article may be used in place of the more than one device or article.

The functionality or the features of a device may be alternatively embodied by one or more other devices that are not explicitly described as having such functionality or features. Thus, other embodiments of one or more of the inventions need not include the device itself.

Techniques and mechanisms described or referenced herein will sometimes be described in singular form for clarity. However, it should be noted that particular embodiments include multiple iterations of a technique or multiple manifestations of a mechanism unless noted otherwise. Process descriptions for computing equipment or such blocks in figures should be understood as representing modules, segments, or portions of code which include one or more executable instructions for implementing specific logical functions or steps in the process. Alternate implementations are included within the scope of embodiments of the present invention in which, for example, functions may be executed out of order from that shown or discussed, including substantially concurrently or in reverse order, depending on the functionality involved, as would be understood by those having ordinary skill in the art.

### Detailed Description of Exemplary Embodiments

The system and method disclosed herein uses a lift system for fenders, with receptacles providing secure stowage for fenders when not in use. Additionally, an application on a smartphone may remind the crew to lower the fenders when approaching a dock and possibly, based on previous dockings, a reminder for a mark on the line where to cleat or fast cleat the line, so the fender has the appropriate height for that dock. In some cases the application may provide a reminder or in other cases the application may actually perform the fender deployment operation (as the receptacles are motorized in those cases). In most cases the fender is positioned at the same height while docking, but in some situations different heights may be necessary.

In some cases, a receptacle for stowing a fender is used, that is sometimes attached to a part of a vessel or boat, and the receptacle has an opening for threading through a line (in some cases with a pulley), the line attached to a fender, the line operable by a user to pull up the fender into the receptacle through a second opening at the bottom of the receptacle. Typically, the receptacle has at least one moveable, hinged section, the section formed in such a manner, that when pulling up the fender to the top, the movable section is clamping in on the fender and securing it. In some cases the receptacle and the moveable section can be made of a rigid material such as a metal, suitable for marine use. In other cases a majority of the parts are made from a soft plastic material suitable for molding. In yet other cases, the parts of the receptacle are made of a combination of rigid metal parts and soft plastic materials. Additionally, in some cases a fast cleat is provided to secure the line in at least two positions, one of which has the fender full retracted and at least one other having the fender deployed, and wherein the fast cleat may be mounted in an easy to reach location on the vessel. Further, an application for use on smart phone can be provided, and the application has access to a third party map system. The application also has access to the GPS system of the smartphone. When approaching a docking site the application can be used by a user to add locations used by the vessel for landing, and the user can enter a mark representing the height of the fenders deployed. In some cases, the application will display and or make heard a reminder to deploy at least one fender, and that display will include the previously stored height mark for deploying the fender. In yet other cases, the receptacle for stowing a fender will have a cleat or auto cleat to allow the line to be secured at any position. In some of these cases the cleat is attached to or near the receptacle. Furthermore, in some cases the cleat can be released with a controlled jerking of the line. In some cases the line may be routed inside the receptacle and exit from the same opening as the fender.

In additional cases, the system and method disclosed herein uses wired or wireless communication, such as, for example, Bluetooth, to control automatic deployment and retraction of boat fenders. The mechanism can be powered by solar or the boat DC.

In some other cases, a system may comprise a receptacle for lowering one or multiple boat fenders, with the fender attached to a line that is coupled to a winch that is coupled to a motor, with the motor controlled by a controller that may be activated via wireless control signals. Power for the motor may be drawn from a battery, which may be the onboard power supply or, alternatively, may be separately charged from a solar panel. Alternatively, each receptacle may have an individual controller, battery, and solar panel, not requiring any wiring between the units.

In some cases, the system and its methods enable these fenders to be controlled from a mobile computing device, such as a smartphone or tablet, both of which should be considered equivalent for all purposes here. Additionally, in some cases, based on repeated visits, the fenders can deploy automatically based on the GPS location of the boat and the fact that its trajectory leads the boat to a landing slip, berth, dock etc.

In further cases, a smartphone with an app may be used to control one or more of the receptacle controllers and a multitude of automatic receptacles. The app can also control receptacles based on previous programming, without requiring user interaction, and, additionally, based on distance to a landing site derived from GPS data and map data, can prompt the user for an action and can memorize that action for future use. This app may include a dedicated control panel to wirelessly control one or more controllers of receptacles, using Bluetooth or Wi-Fi etc. as a wireless protocol.

In some cases, rather than a smart phone or tablet, an onboard navigation system or some other computerized boat system may be upgraded or extended to add the control functionality. This could be done via wired or wireless control of motorized buckets. For purposes, here, they all should be considered equivalent and a may have a GPS enabled computing device.

In some cases, rather than mounting a receptacle to the railing, a receptacle type tube could be integrated into the hull of a boat, similar to a torpedo tube and with or without an outer door protecting the fender when not in use. It may be designed outside the displacement section of the boat hull, thus eliminating complicated locks on the inside, and additionally not requiring waterproofing of the interfaces. For purposes herein, it would be considered essentially equivalent.

In additional cases, in a system with one or more receptacles for lowering one or more fenders attached to a line, each receptacle may be mounted with one or more hinges so the receptacle can swing out from the boat's outline, for easy deployment of a fender. Further, each receptacle may be controlled for the swing-out with a lever attached to the boat and used to initiate and stop or reverse the swing-out action of the receptacle. This lever may be a hinged arm and may be operated manually or by a motor. In some cases, the receptacle may be mounted substantially within the boat's outline and angled so the fender may be lowered through an opening in the railing over the edge of the boat's board. The receptacle, in such cases, may also have an additional slide extension at the bottom opening to extension guide the fender over the edge of the boat. The receptacle may, in such cases, extend out through an opening in the railing to facilitate easier deployment of the fender, which deployment may be accomplished either manually or with the help of a motor, and the swing-out may be achieved with the help of an additional motor.

In some cases, the winch may feed the unused line into a small receptacle or storage compartment that will hold the unused section. In yet other cases, a spool maybe used to wind on and store unused sections. In yet other cases, rather than normal line or rope, chains made of metal and or plastic material maybe used, and the winch may have matching grooves that garb the chain links.

In additional cases, the receptacle for lowering fenders has a moveable bar across the opening; this bar, which can move along the cylindrical axis of the receptacle and is pulled up alongside the fender into the receptacle, has a small opening for guiding the line, as well as additional openings or features for guiding itself up and down the receptacle. Further, an external force can make the receptacle swing back into the hull line, counteracting at least a spring, connected to the hinge, that moves the receptacle outside the hull line for normal operations. In some cases, the line may be coupled to a motor-driven winch, with the motor controlled by wired or wireless signals.

In some cases, in a system with a receptacle and a mechanism for stowing a boat fender, upon retracting the fender, the system shuts off the motor if an over-current arises due to a tangle in the line or a catch of the fender below the receptacle. Upon such a shutdown of the motor, the system engages in a limited number of small reversals in an attempt to detangle the line and/or the fender and achieve a full retraction. Additionally, a camera and visual recognition software may be used to detect a tangle or other problem with the line or the fender, in addition to the current sensing. Further, upon attempting to retract the fender, the motor shuts off if a disturbance in the retraction motion is recognized by the visual recognition software due to a tangle in the line or a catch of the fender below the receptacle. In such cases, the system engages in a limited number of small reversals to attempt to detangle the line and or the fender and achieve a full retraction. Moreover, the current control may be used to aid the detangling control of the reversal of the line motion in addition to the camera. Additionally, if after several small reversals retraction of a fender is impossible, in some embodiments a user may be notified of the problem, and of the fact that a fender has not been fully retracted, thus alerting the user to a possible need for manual intervention.

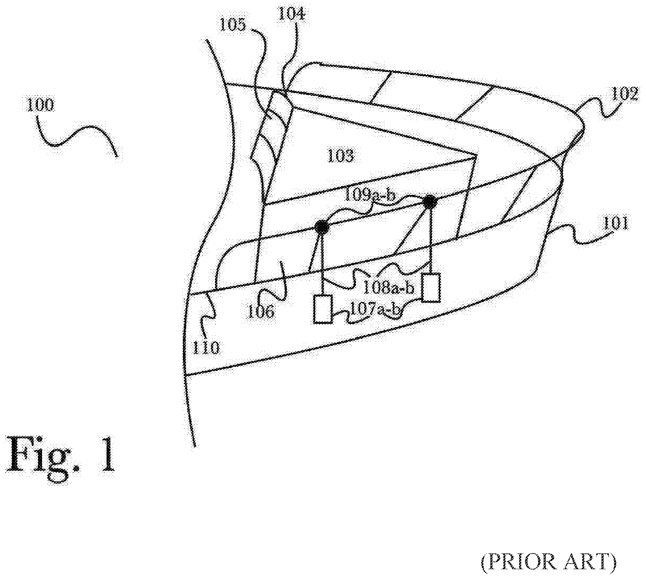

**Fig. 1** **(PRIOR ART)** is an illustration of a typical pleasure boat **100,** illustrating how fenders are normally hung on a boat's railings according to the prior art. Two fenders **107a** and **107b** hang down from the railing, positioned with lines **108a-b** held in place with knots **109a-b** on railing **102** to protect the boat from damage when the boat makes contact with the dock. During a cruise, the fenders need to be lifted up and securely stowed, as otherwise the wave action could easily rip them off or cause them to damage the boat. Access to the railing for purposes of deploying and positioning fenders from the top of the boat may be difficult and hazardous (particularly in rough seas or inclement weather), because in many cases access is available only from a narrow ledge **106** via a step **110** or from the top of the boat prow **103** using window gate **105** in windshield **104,** that window gate being heavy and difficult to open. Boat prow **103** is often of a slick material such as fiberglass coated, in some cases, with marine paint. Further, the surface may in many cases be wet with, in some cases, dust mixed in, and/or the boat may be rocking and jerking in wind and waves, making it even more slippery and more hazardous. From the railing a person must then lean over to deploy and position the fenders.

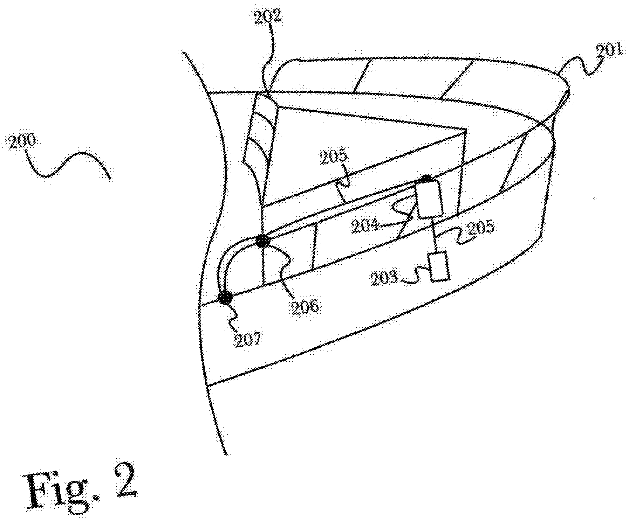

**Fig. 2** shows an exemplary representation of a system **200** of manually deployed boat fenders, with stowage receptacles **204.** Windshield **202** has a center partition that can be folded away to reach the boat prow. Attached to railing **201** is fender receptacle **204,** which holds fender **203** when the fender **203** is not in use (only one fender **203** and receptacle **204** are shown, for purposes of clarity and simplicity; however, typically, multiple fenders are used). A rope, cable, or similar flexible line **205** (for purposes of this system, rope, cable, and line all shall be considered equivalent, irrespective of constituent material(s)), runs from a position above receptacle **204,** across pulley **206,** to cleat **207,** which cleat **207** is used by an operator to secure line **205** in position, which position is often predetermined and marked on line **205.** Thus fender **203** may be hauled up into receptacle **204** when the boat is undocked and taken out on the water, and fender **203** may be deployed (lowered) when the boat approaches a dock.

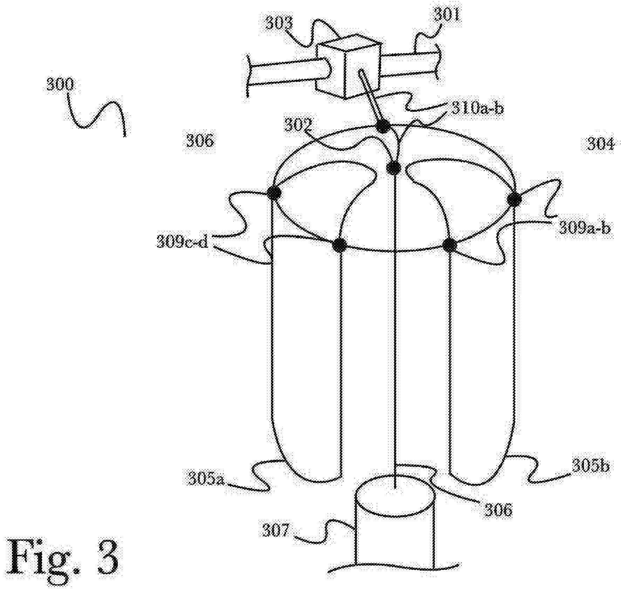

**Fig. 3** shows an exemplary representation of a fender stowage receptacle **300** as shown on **Fig. 2**. Attached by clamp **303** to railing **301** is a holder **310a** that holds ring **304,** which in turn holds receptacle **204,** plus a pulley (or ring) **302,** via holder **310b,** the pulley **302** used to redirect line **306** when it comes up. In this example two sections (or segments) **305a, b** are hinged at the top with, respectively, hinges **309c,d** and **309a,b.** Hinges **305a,b** are attached to ring **304.** When fender **307** is pulled up on line **306** across pulley **302,** the tips of hooks **308a,b** cause the extensions at the bottoms of sections **305a,b** to clamp the fender **307** in place, as the hinge lever action causes the bottom ends of sections **305a,b** to pull in. In some cases, receptacle extension **305a,b** may be made of plastic; in other cases, they may be made of some suitable material resistant to corrosion, such as, for example, chrome-plated wire. In yet other cases, the bottom end maybe be flaring (not depicted), allowing for an easier insertion of fender **307;** in other cases it may be hooked inward (not depicted), providing additional securing of fender **307** when stowed. Also, in additional cases, rather than two sections, three, four or more sections maybe used.

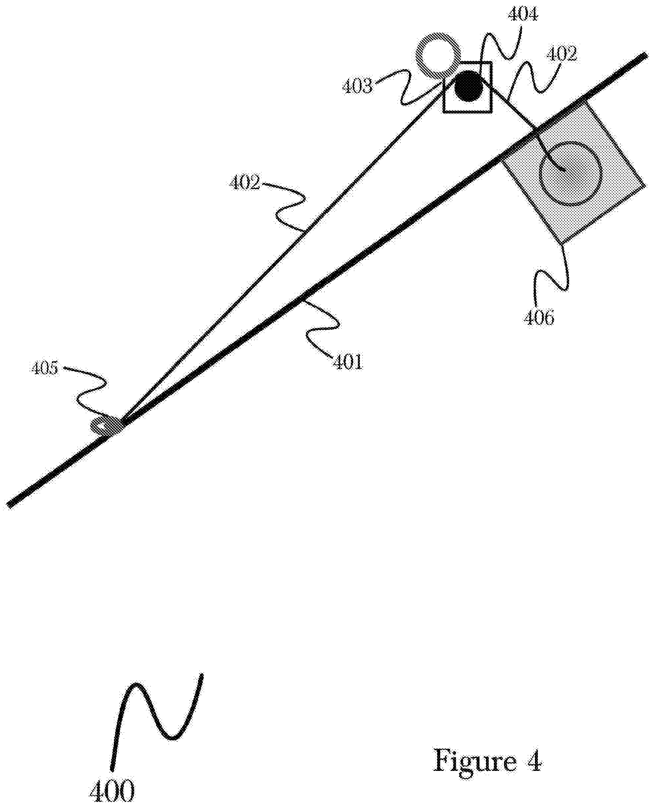

**Fig. 4** shows an exemplary representation of a pulley and remote cleat mechanism **400** for the safe and convenient stowage and deployment of boat fenders **400.** Line **402** comes in from the receptacle **406** on railing **401** and goes through pulley wheel **404,** which is attached to pulley block **403.** At the pulley, line **402** is redirected to cleat **405.** In some cases, double or triple pulleys maybe used as often more than one fender is used. Also, instead of regular cleats, fast cleats and multi-line fast cleats maybe used for easier use.

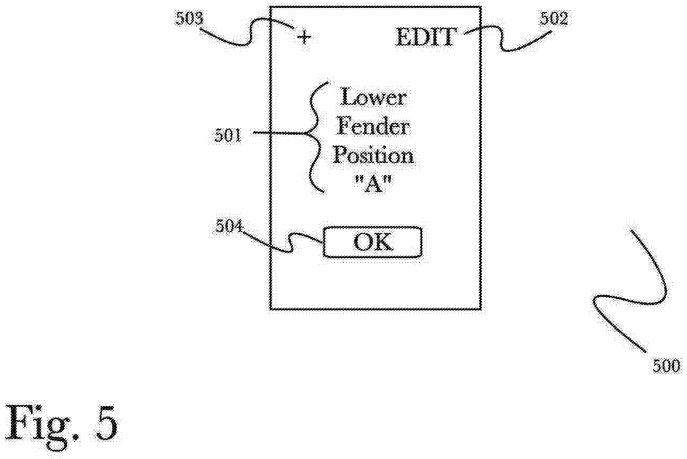

**Fig. 5** shows an exemplary representation of a user reminder application **500** for boat fender deployment according to a preferred embodiment of the invention. It uses high-accuracy marine maps such as, for example, NAVIONICS™, to determine whether the boat is about to dock, and notifies the user with message **501** (and in some cases an acoustic alert) of the position to which the lines need to be lowered. Also shown are buttons to add new positions "+" based on current GPS location, to set the height, and to "edit" for modifying an existing height, for example, or delete a previously stored location. Further, an OK button enables the operator to confirm and/or close the alert and mute an acoustic signal.

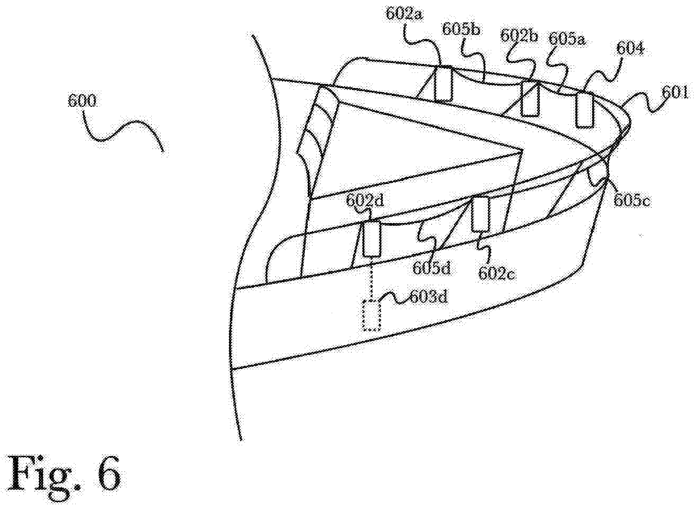

**Fig. 6** shows an exemplary representation of a system **600** where the connection of four receptacle and fender mechanisms connected by wires to a solar panel **604** according to a preferred embodiment of the invention. Four receptacles **602a-d** are attached to railing **601.** Wires **605a-d** connect the receptacles to solar panel **604,** which is also attached to railing **601.** Beneath solar panel **604,** and connected to it, are a controller and a battery (not shown here). Fender **603d** (only one fender shown here, for clarity and simplicity) is shown as it may be deployed, with multiple dotted lines to indicate that the fender may be deployed at any of multiple heights. It is clear that a boat may carry more than four receptacle-fender units, and they are typically deployed all along an engaged side of the boat, from prow to stern; however, for clarity and simplicity, only four are shown as positioned here.

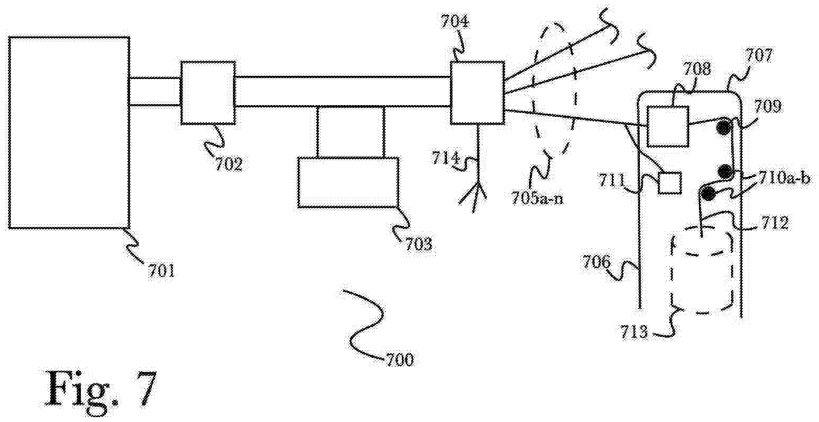

**Fig. 7** is a diagram of a system **700** with a solar panel assembly connected to a receptacle and fender mechanism (as shown in **604)** according to a preferred embodiment of the invention. Panel **701** connects to charge control unit **702.** Unit **702** is an existing commercial product that is readily available. Often unit **702** may be integrated into a junction box at the rear of panel **701.** Battery **703** may be any of various types of battery known in the art, such as, for example, lead-acid, lead-acid gel, lithium, lithium ion, LiFePO4, NiCd, NiMh, or any other suitable type, depending on which is best and most suitable for its situation. System controller **704** has an antenna **714** and wires **705a-n** leading to the receptacles. Exemplary receptacle **706,** connected to box **704** via wire **705x,** contains fender **713,** shown in a dotted line to indicate that it is not externally visible. Line **712** goes over two pulleys **710a, b** to winch **709** that is attached to motor **708.** Casing **707** protects assembly elements, including **707, 709, 710a,b, 711,** and **712** against water, collision, injury of persons nearby, etc. When fender **713** is retracted, switch **711** signals to controller **704** when the fender is fully retracted. In some cases, a smaller solar cell and smaller controller may be mounted on the top of the receptacle, omitting the need for wires such as wire **705x.** Typically wire **705x** uses a four-lead wire, that is, two for the motor and two for the switch. In other cases, instead of using a solar panel to power the system, controller **704** may be powered from the boat's power supply. In yet other cases, the assembly contained in case **707** may be installed centrally and the line may be pulled as shown in Figure 2 to a location with multiple motorized winches. Also, in lieu of using a mechanical switch **711,** optical means, both transmissive and reflective, may be used, or simply a change in current of the motor that the controller can detect and use as an indicator of too much resistance, either at the end or if fender is caught somehow. All these exemplary variations, and other, similar variations, shall not depart from the system and method disclosed herein.

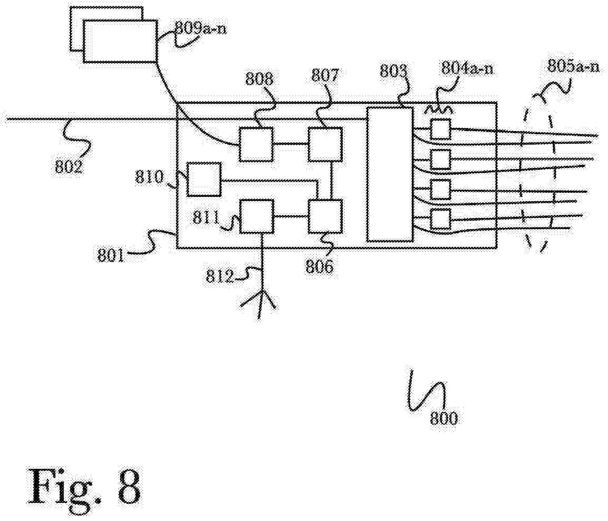

**Fig. 8** is a diagram of an exemplary controller for the deployment and retraction of fenders **800,** also shown in **704,** according to a preferred embodiment of the invention. Power supply input **802** may come from a local battery, a shipboard battery, or some other power source. Controller **801** has a microprocessor **806,** typically a system on a chip with memory **807** and nonvolatile memory **808,** which nonvolatile memory contains software **809a-n,** including an operating system as well as actual commands for the system. Input/output unit **810** may pair the radio **811** with a smart phone. Radio **811** connects to microcontroller **806** as well as to antenna **812.** The connection between radio **811** and a smart phone may be via, for example, Bluetooth, Wi-Fi, or both, as needed. Power switch unit **803** distributes power to all these devices, as well as controlling output power through switches **804a-n,** thus enabling the winches to extend lines to extend or retract the fenders. Switch unit **803** also has the input sensors for the switches in the receptacles, such as, for example, switch **711** inside casing **707,** described above in the discussion of Figure 7, for extending or retracting the fenders.

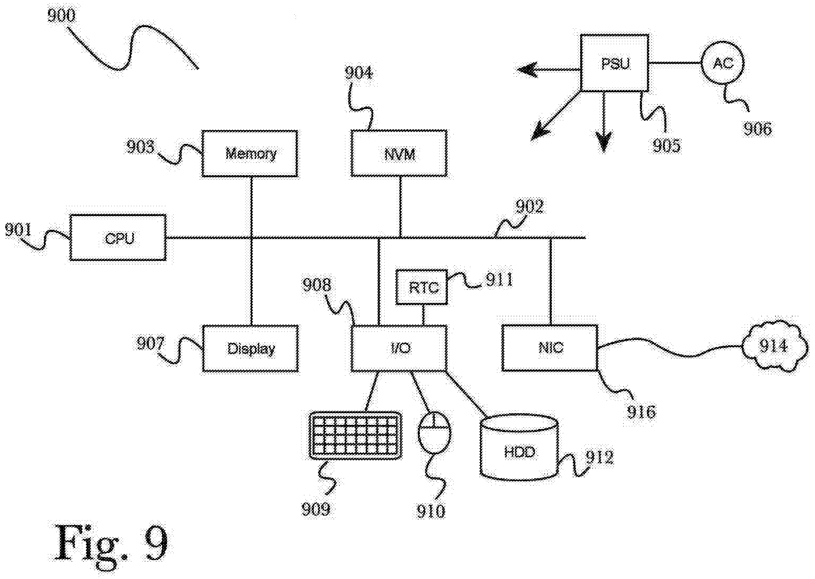

**Fig. 9** is an exemplary diagram of a computer system **900** as may be used in the system and methods disclosed herein, according to various embodiments of the invention. It is exemplary of any computer that may execute code to process data. Various modifications and changes may be made to computer system **900** without departing from the broader scope of the system and method disclosed herein. CPU **901** is connected to bus **902,** to which bus is also connected memory **906,** nonvolatile memory **904,** display **907,** I/O unit **908,** and network interface card (NIC) **916.** I/O unit **908** may, typically, be connected to keyboard **909,** pointing device **910,** hard disk **912,** and real-time clock **911.** NIC **916** connects to network **914,** which may be the Internet or a local network, which local network may or may not have connections to the Internet. Also shown as part of system **900** is power supply unit **905** connected, in this example, to ac supply **906.** Not shown are batteries that could be present, and many other devices and modifications that are well known but are not applicable to the specific novel functions of the current system and method disclosed herein. Also present, but not shown in detail, as part of I/O unit **908,** for example, will local wireless connections, such as Bluetooth, Wi-Fi, ZigBee etc. Further, in many cases, a GPS receiver is used to provide for location services.

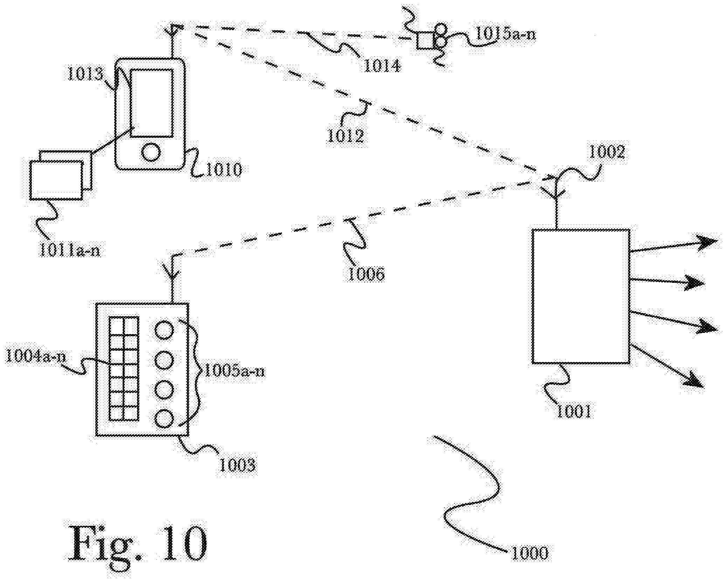

**Fig. 10** is an exemplary diagram of a wireless control system **1000** for deployment and retraction of boat fenders, according to a preferred embodiment of the invention. Controller **1001,** which is functionally equivalent to controller **704,** described above in the discussion of **Fig. 7****,** has an antenna **1002** and also the software and other components required to control fender deployment operations as previously described. Controller **1001** may connect to a dedicated control unit **1003,** which unit may have a set of buttons **1004a-n,** such as, for example, two rows of buttons **1004a-n** as shown here. Each button has a separate assigned function, such as controlling the raising or lowering of one or more fenders. General controls **1005a-n** may, for example, indicate the status of certain system functions, such as, for example, power state and the state of connectivity to wireless network **1006,** which network may use Bluetooth, Wi-Fi, or some other similar connection protocol. Controls **1005a-n** may also control functions such as raising or lowering all fenders or certain combinations of fenders, such as all fenders on one side, for example. As an alternative control unit, system **1000** may use a smart phone, such as, for example, phone **1010,** on whose touch screen **1013** the user can control the functions of specialized software **1011a-n.** Software **1011a-n** is specific to system **1000** and typically may be downloaded from an app store supplying software for the particular model of phone **1010.** Software **1011a-n** can communicate with controller **1001** via connection **1012,** which may be Bluetooth, Wi-Fi, or some other similar connection protocol. Connection **1014** enables phone **1010** to communicate with geo-positioning satellites **1015a-n,** using any of various global positioning systems (GPS) supported by phone **1010** and available currently or in the future.

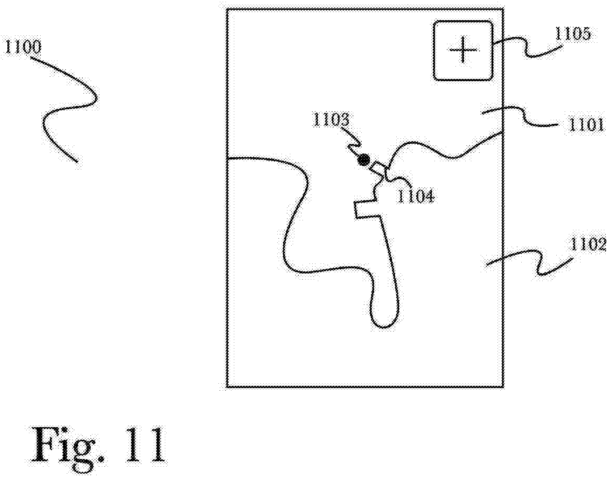

**Fig. 11** shows a representation of an exemplary system application screen **1100** depicting a boat approaching a dock in a harbor according to a preferred embodiment of the invention. In this example, a boat **1103** is in water **1101,** approaching dock **1104,** which dock extends from land **1102.** When boat **1103** comes within a certain predetermined distance from dock **1104,** an indicator **1105** appears on application screen **1100.** The boat's position, in this example, is determined by high-accuracy navigational mapping software (not shown here) as mentioned in the description of **Fig. 5****.** Indicator **1105** enables a user to open addition application menus with additional functionality.

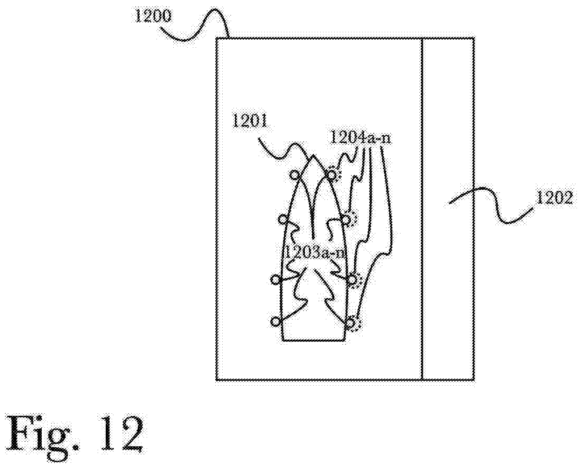

**Fig. 12** shows an application screen **1200,** accessed using indicator **1105** that is exemplary of additional application functionality according to a preferred embodiment of the invention. In this example, boat **1201,** viewed from the top, approaches dock **1202.** Screen **1200** shows all boat fenders **1204a-n,** of which in this example there are eight. Those fenders on the side approaching dock **1202** may be indicated, for example, by halo buttons, that is, buttons showing a halo around the fender indicating a possible user interaction. Screen **1200** may also contain an additional button (not shown here) that enables a user to control multiple fenders, such as, for example, all fenders together, all fenders on the side of the boat approaching the dock, all front fenders, all rear fenders, etc.

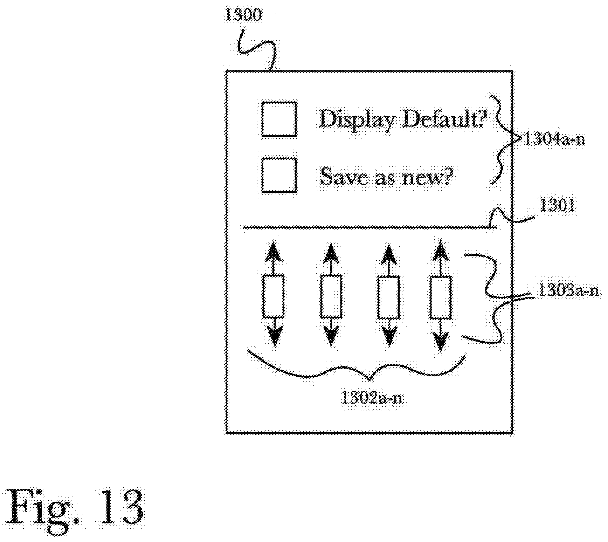

**Fig. 13** shows an exemplary application screen **1300** that may open when a user has deployed boat fenders as described in the discussion of **Fig. 12****,** according to a preferred embodiment of the invention. Represented on screen **1300** is one side **1301** of the boat, with fenders **1302a-n.** Above and below fenders **1302a-n** are arrows **1303a-n,** indicating fender movement up or down. Buttons **1304a-n** give a user control of general functions, such as, for example, deploying all fenders to a default position or saving a manually controlled position as a new default position. Individual fender positions may be manually controlled by pressing any of arrows **1303a-n** to adjust any one fender up or down as desired. When the fenders are all adjusted for a certain dock, the user could then save the fender positioning as a new default for this location, so the next time the user goes to approach this particular dock, the fenders can be deployed automatically to the saved positions when the boat comes within a certain predetermined distance from the dock.

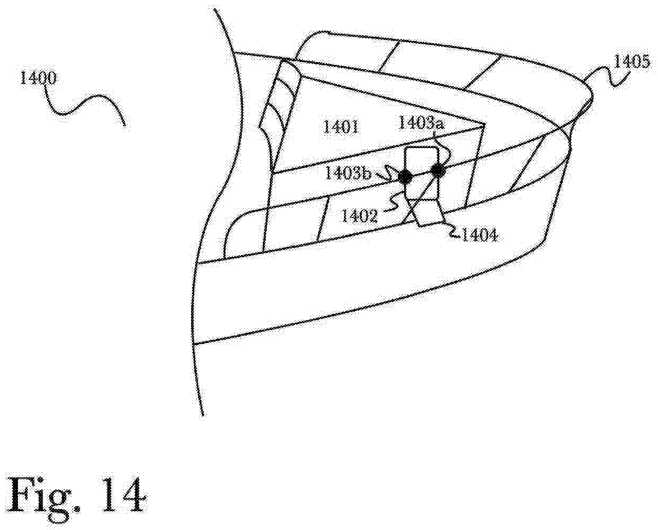

**Fig. 14** shows an exemplary representation of a boat prow **1400** where a receptacle **1402** is mounted on one or more hinges **1403,** according to a preferred embodiment of the invention. This figure shows many structures found at the prow of the boat, including railing **1405,** prow **1401** with cabin windows, and other features. Exemplary receptacle **1402** is, in this example, mounted behind railing **1405,** with mounting hinges **1403a,** b on the inside of railing **1405.** Chute **1404** is attached to receptacle **1402,** so the fender within receptacle **1402** may slide down against the boat side. Deploying and retracting the fender may be done manually, with, for example, a line, or by a motor. In some cases, chute **1404** may have a small lip, so the fender can easily be retracted back up into receptacle **1402.** In other cases, chute **1404** may be recessed behind the farthest extension of the outward vertical curve of prow **1400,** thus not protruding into the line of travel (up and down) of the fender.

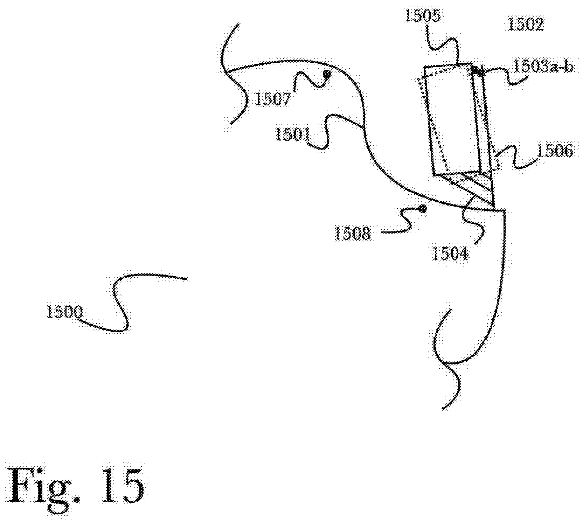

**Fig. 15** shows an exemplary cross section **1500** of a boat **1501** with a representative receptacle secured by mounting hinges and a chute that aids in deployment, according to a preferred embodiment of the invention. The outlines of boat **1501,** prow section **1507** on top, walkway **1508** behind the railing, and the hull are all, for reasons of clarity and simplicity, very simplified. Receptacle **1502,** secured by mounting hinges **1503a, b,** and chute **1504** are slightly behind the outermost part of the hull of boat **1501,** because fender **1505** is heavy enough to slip over the edge of boat **1501** when it is deployed. Deploying and retracting fender **1505** may be done manually, with, for example, a line, or by a motor. On the other hand, when fender **1505** is retracted, because there is no edge of chute **1504** protruding beyond the hull, fender **1505** can easily slip back up chute **1504** and into receptacle **1502.** Outline **1506** shows an alternative receptacle **1502** position, wherein receptacle **1502** may be hinged around the railing so that during deployment and retraction of fender **1505,** the receptacle bottom tilts slightly outward.

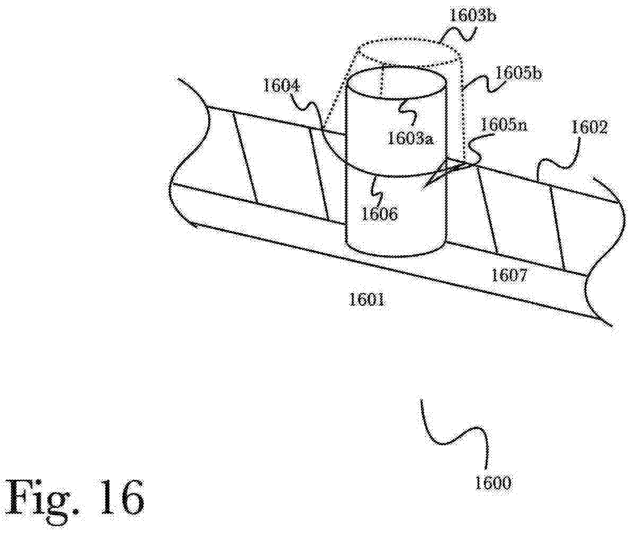

**Fig. 16** shows a diagram of an alternative arrangement **1600** by which receptacle **1603** may be recessed, according to a preferred embodiment of the invention. Shown are walkway **1607,** behind railing **1602,** and prow **1601.** Railing **1602** has a notch or bay **1606** in the inner edge so fender receptacle **1603** can retract in large part behind the outline of the railing. In this example, hinge **1604** enables receptacle **1603** in position **1603a** to swing out into position **1603b.** Arm **1605,** shown in position **1605a** retracted and in position **1605b** extended, may be operated manually, with, for example, a lever or knob, a line, a spring or by a motor, and the like. Deploying and retracting the fender (not shown here) may also be done manually, with, for example, a line, or by a motor, as described earlier herein. Arm **1605,** in extended position **1605b,** pushes receptacle **1603** into position **1603b,** so the fender can deploy vertically without hitting the deck or railing. In some cases, such a bay or notch **1606** may be flanked by one or two posts, enabling additional hinges to further control the swing of receptacle **1603** (not shown). Once the fender is deployed, arm **1605** may retract receptacle **1603** to a position behind the boat's outline.

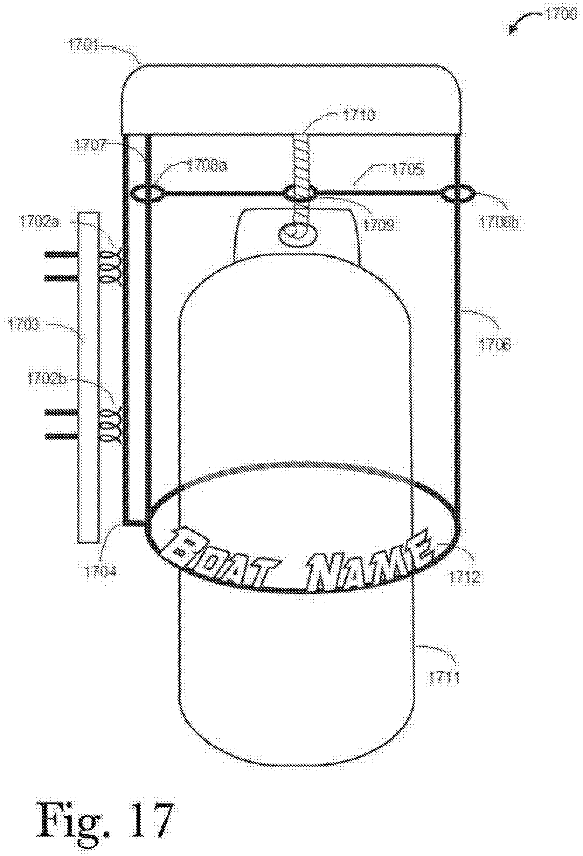

**Fig. 17** shows an exemplary representation of an enhanced arrangement **1700** of boat fender receptacle **1701** according to a preferred embodiment of the invention. Receptacle **1701** has a mechanism for winding up line **1710** to retract fender **1711.** The hinge allowing receptacle **1701** to swing in behind the hull line is comprised of springs **1702a** and **1702b.** These springs move receptacle **1701** outside the hull line for normal operations. Although this example shows two springs **1702,** it is clear that other arrangements may have more or fewer springs **1702.** These springs **(1702a-n)** hinge between bar **1703,** which attaches typically to a vertical railing post or other suitable fixed object(s) on the boat, and receptacle rail **1704** (part of the receptacle structure **1700).** Moveable bar **1705** has three openings. These openings **1708a** and **1708b** are at each end, for riding up and down receptacle bars **1707** and **1706,** as well as one opening **1709,** which is roughly in the center, for guiding line **1710** to which fender **1711** is attached. In the fully extended position, moveable bar **1705** is stopped at the bottom end of the receptacle, across the receptacle opening. As the fender **1711** is retracted, it catches moveable bar **1705** when it reaches opening **1709** and pushes bar **1705** up as fender **1711** is fully retracted, bar **1705** being moveable along the cylindrical axis of receptacle **1701.** Optionally the boat name **1712,** in alphanumeric characters, may be applied in desired color(s) and finishes. In some cases receptacle **1701** may contain a camera (not shown) that provides a close-up view of the pier to the controlling tablet and or smartphone, helping to "fine-maneuver" the boat into the desired docking position.

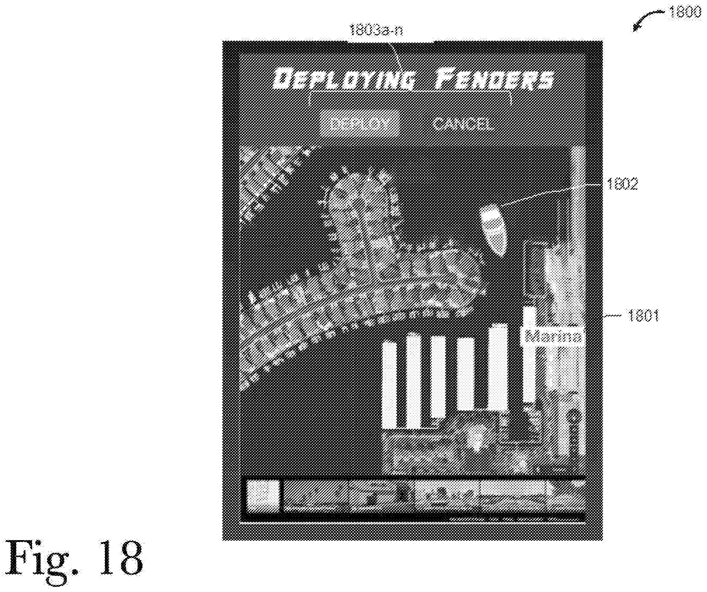

**Fig. 18** shows an exemplary fender deployment reminder pop-up screen **1800** according to a preferred embodiment of the invention. When approaching a marked location, such as a previously visited landing place. In this example as boat **1802** enters marina **1801,** the question of whether to deploy or not, if no prior default was set, appears at the top of screen **1800.** The user can then issue the command by clicking either one of the response buttons **1803a-n.** Although this example shows two buttons **1803,** there could be more, such as, for example, more than one deploy button, one for the standard height, and one or more for other options.

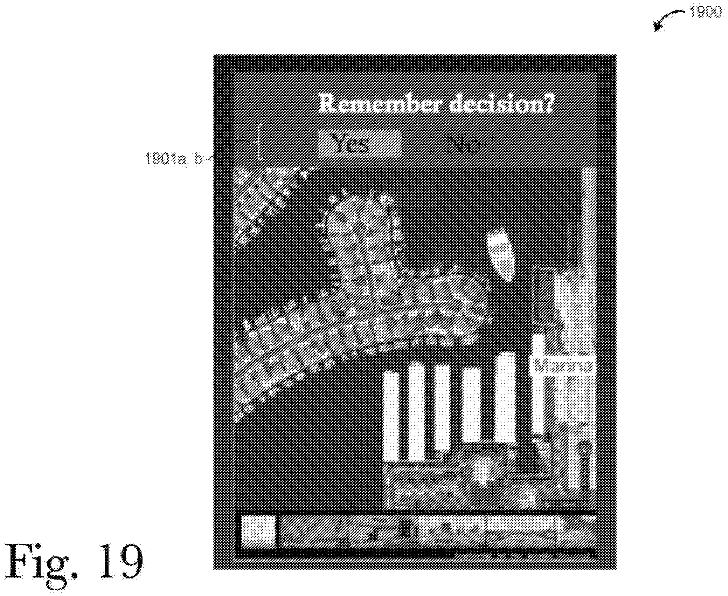

**Fig. 19** shows a screenshot **1900** in which the system prompts the user whether to remember a decision regarding fender deployment. Specifically, the system prompts the user whether to remember the decision from screen **1800** for the next time the vessel approaches the same location, by selecting either one of the response buttons **1901a-b.**

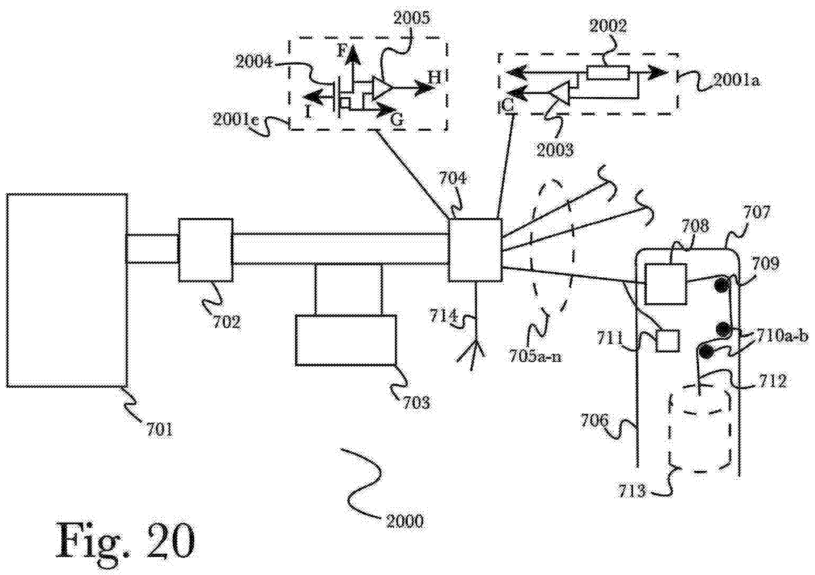

**Fig. 20** shows a modified version of **Fig. 7**, according to one aspect of the system and method described herein. Added to controller **704** are two optional extensions. In configuration **2001a** measuring resistor **2002** has been inserted in series with motor **708.** Sensing amplifier **2003** delivers a sensing voltage to point C. Once a certain current has been exceeded, the sensing voltage triggers a motor shut-off by notifying the shutoff circuitry in the controller, typically in a way similar to the way shutoff switch **711** is notified. This approach can sense if the motor is over-loaded and can protect the batteries, the motor, and the driving transistors or relays. It can also be used to shut off the motor in the case of an entanglement, such as, for example, a tangle in the line or rope that pulls up the fender, or if the fender is somehow tangled below the receptacle and cannot be pulled up. Of course, it will be appreciated by one having ordinary skill in the art that other problems may occur that prevent a fender from being fully retracted; for example, due to boat motion caused by water waves, a fender may fail to properly enter the receptacle because of misalignment or rotation of the fender. Thus this approach can protect the line from being torn and the fender lost at sea. Alternative configuration **2001e,** shows, instead of an added resistor **2002,** that the switching transistor **2004** driving motor **708** between contact points **F** and **G** is used as the measuring resistor, and the amplifier **2005** drives the voltage **H.** Also, point **I** drives the transistor. Both configurations **2001a** and **2001e** are commonly used approaches to measuring currents or protecting motors and/or other circuitry elements from overload and are not novel in and of themselves. However, the use of motor overloads to detect entanglement with respect to the fender, and in particular to aid with untangling, is novel.

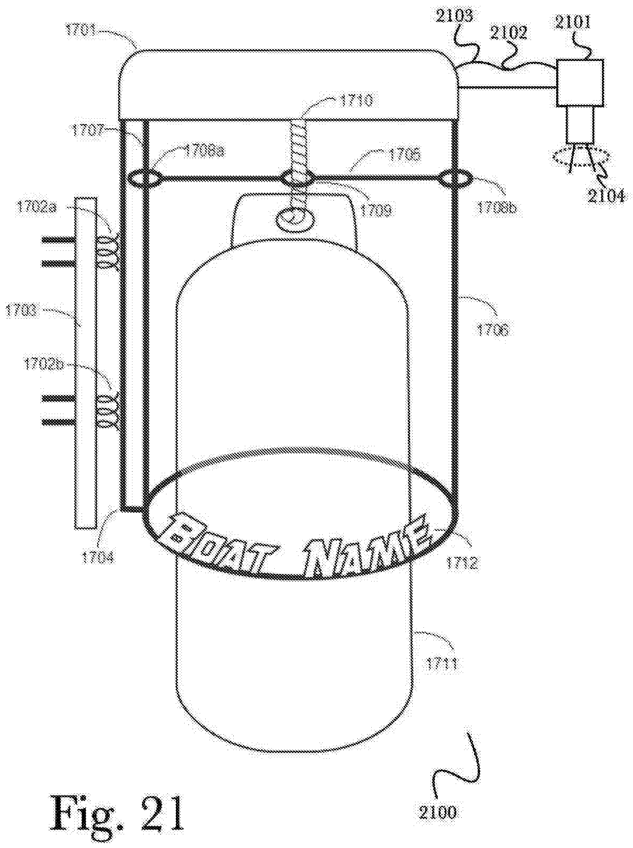

**Fig. 21** shows a modified version of **Fig. 17**, according to one aspect of the system and method described herein. In approach **2100,** camera **2101** is attached by stick **2102.** Wire **2103** connects to controller box **1701,** enabling transmission of images from the camera to show when the fender is lowered. When there is a problem raising the fender, camera view field **2104** can observe the state of the fender, such as, for example, if the fender is stuck on the sea bottom, if the fender line is tangled, etc. It is clear that wire **2103** could be run within stick **2012,** or the camera could be placed in a bulge out of the top of controller **1701,** etc. Various different cameras and viewing angles may be used to provide the best views of a problem. It is not necessary in all cases that the camera explicitly observes a tangle. It can be used, for example, simply to see whether the protection circuitry described above in the discussion of **Fig. 20** has stopped the motor due to difficulty in raising the fender. In some cases, visual recognition software may be embedded in the camera module or in the central controller, so the system can identify either a tangle or a lack of motion of the fender, which, when the motor should be in motion, indicates highly likely a tangle or similar problem.

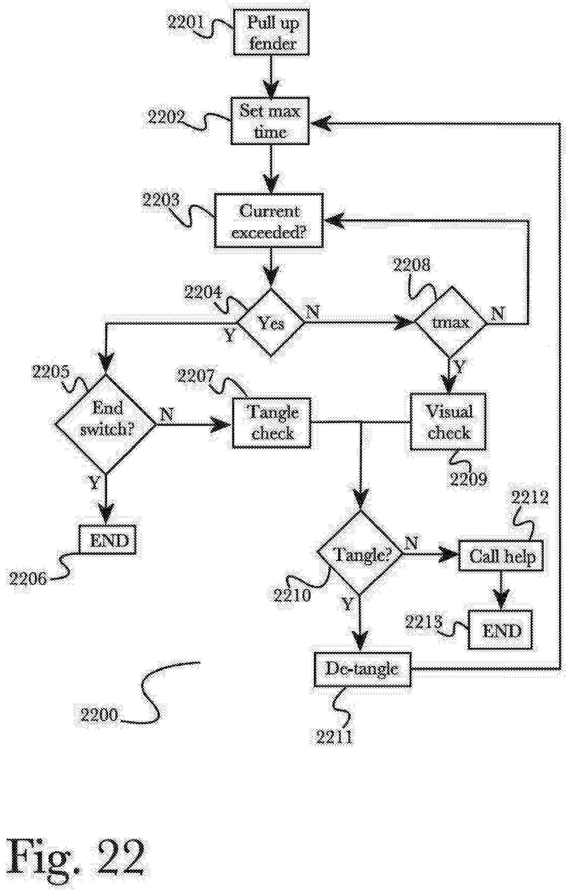

**Fig. 22** shows an exemplary process **2200** for resolving problems with raising the fender, employing the two novel approaches disclosed above in the discussions of **Figs. 20** and **21****,** according to one aspect of the system and method disclosed herein. In step **2201,** the system receives a command to pull up the fender. In step **2202,** the system sets a maximum time to attempt to pull up the fender, and in step **2203,** the system monitors the time to determine when the current attempt exceeds the preset maximum time. If, in step **2204,** the system determines that the current attempt has exceeded the preset maximum time, in step **2205** the system checks to see if an End switch, such as, for example, switch **711** described in the discussion of **Fig. 7**, is activated, signaling that the fender is fully retracted. The inventor envisions that various switching means may be used as an End switch **711** according to the invention; for example, conventional contact-based electrical switches, radio frequency identification (RFID) proximity switches, mechanical switches, magnetic switches, or any other similar means of detecting when a fender is fully retracted. Additionally, more than one end switch may be utilized in some arrangements, for example to increase reliability if the fender is retracted at an angle, or to provide redundancy should any single switch fail (for example, due to damage to the receptacle). If the End switch is activated, indicating that the fender or movable bar is fully retracted, in step **2206** the process ends. However, in step **2205,** if the system detects that the End switch is not activated, in step **2207** the system initiates a check for a tangle in the fender line. In step **2210,** the system checks to determine the number of tangle checks, such as, for example, the first occurrence of a tangle check, or any number up to a preset maximum. Typically, only one or two attempts to detangle would occur, to avoid damage to the equipment. If, in step **2210** the detangle attempts do not exceed the preset limit, in step **2211** the system attempts to detangle the line, typically by a little tug or pull on the line, as would be done manually. After each detangle attempt in step **2211,** the system returns to step **2202** to repeat the process. If the maximum current is not exceeded in step **2204,** then in step **2208** the system again checks to see if the maximum time or number of attempts has been exceeded. If the detangle attempts fail repeatedly, in step **2209** the system attempts a visual check of the fender, using the camera as described in the discussion of **Fig. 21**. When the visual check is finished, the system once again attempts a detangle. If all system detangle attempts fail, the system issues a call for operator help in step **2212,** and in step **2213** the process ends. Different strategies for detangling may be used, for example resulting in controlled jerking of the line and or the fender in order to resolve the tangle or jam. There may also time limits for individual sets of detangling and overall attempts in order to protect the components of the system from overload/damage. Further, failure to complete retraction may result in an alert sent to an operator or other predetermined location or person.

In some cases, in a system with a receptacle and a mechanism for stowing a boat fender, upon retracting the fender, the system shuts off the motor if an over-current arises due to a tangle in the line or a catch of the fender below the receptacle. Upon such a shutdown of the motor, the system engages in a limited number of small reversals in an attempt to detangle the line and/or the fender and achieve a full retraction. Additionally, a camera and visual recognition software may be used to detect a tangle or other problem with the line or the fender, in addition to the current sensing. Further, upon attempting to retract the fender, the motor shuts off if a disturbance in the retraction motion is recognized by the visual recognition software due to a tangle in the line or a catch of the fender below the receptacle. In such cases, the system engages in a limited number of reversals to attempt to detangle the line and or the fender and achieve a full retraction. Moreover, the current control may be used to aid the detangling control of the reversal of the line motion in addition to the camera. Different strategies for detangling may be used. There may also time limits for individual sets of detangling and overall attempts in order to protect the components of the system from overload/damage. Further, failure to complete retraction may result in an alert sent to an operator or other predetermined location or person.

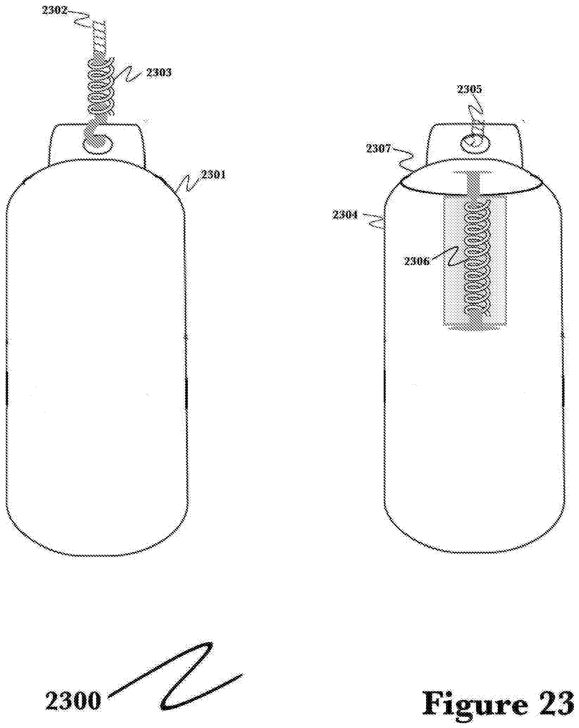

**Fig. 23** shows exemplary embodiments of the invention adapted to provide heavy swell protection for boat fender system **2300.** During the course of boat use, storms or other disturbances may occur that result in the production of heavy swells or waves. These swells can possess enough energy to damage the machinery of either manually operated or motor operated fender systems, particularly when sudden movement of a vessel causes substantial tension to be applied suddenly to any cable holding a fender in place, thereby placing large and sudden stresses on the machinery of fender systems. The effects of heavy swells may operate both while the fenders are retracted-where the confines of the receptacle can serve to exacerbate the strength of the swell-and while the boat is docked-where the swells can exert significant tugging pressure or the fender can get caught between the dock and hull of the boat moving independently of each other, again tugging at the fender with significant force. According to the embodiments shown in **Fig. 23**, mechanisms that use elastic members situated between a fender **2301** and a line **2302** act to mitigate these forces before damage occurs to the rest of the system. In a preferred embodiment, boat fender **2301** is attached to a spring **2303,** and the other end of the spring attached to line **2302,** which goes to the rest of the system. Spring **2303** acts as a buffer between fender **2301** and the rest of the system. While a spring is shown and described, one knowledgeable in the art will realize that other elastic members (such as, but not limited to, bungee cords or bungee cables) could be used for the purpose of swell mitigation. In a second preferred embodiment of the invention, fender **2304** is equipped with a detached top **2307** which can move freely from the rest of fender **2304.** Detached top **2307** is attached to the rest of fender **2304** by a spring **2306** internal to fender **2304;** spring **2306** has a point of attachment to fender **2304** at its lower end, in the interior of fender **2304.** In times of heavy force upon fender **2304** by a swell, spring **2304** serves to buffer the forces by allowing the top of the fender to partially separate temporarily until the stress is relieved. Detached fender top **2307** is then attached to a line **2305** that goes to the rest of the system. Alternatively, an internal spring **2306** may be used without detached top **2307,** in which case spring **2306** may be connected directly to line **2305.** It should be clear that the examples depicted in these figures are relatively simple configurations practical to clearly show the functional aspects of the system; other structures and parts such as but not limited to protective encasements, retainers, correct mounting hardware, drains, and guides are not depicted. Relative lengths or sizes of the parts are not meant to be to scale for operation.

In some embodiments, the rate of raising fender **1711** may be slowed when fender **1711** approaches an intermediate position; that is, intermediate between a deployed position and a stowed position. In a preferred embodiment, as fender **1711** just begins to enter the receptacle (e.g., receptacle **1701**), the rate of raising fender **1711** is reduced, to reduce the likelihood of fouling and to potentially reduce the impact resulting from any misalignment, fouling, or other problem. It will be recognized by one having ordinary skill in the art that various means of detecting when to change (e.g., reduce) the rate of raising of fender **1711** may be used according to the invention. For example, a time duration of raising may be used or, if a stepper motor is used, a count of the number of steps during the raising of fender **1711** may be used. Additionally, various switches, such as electromagnetic proximity switches of mechanical switches, may be placed so that they send a signal to the control system as fender **1711** passes, for example, the lower end of receptacle **1701** while being raised. In some embodiments, receptacle **1701** may be partially open, with a lower circumferential ring at its lowest opening, a partially closed cylindrical portion above this lower circumferential ring, and a fully closed upper portion. In such embodiments, lowering of the rate of raising of fender **1711** into receptacle **1701** would typically occur as the top of fender **1711** enters the lower ring of receptacle **1701.** Other variations are clearly possible, according to the invention, as will be appreciated by one having ordinary skill in the art.

The skilled person will be aware of a range of possible modifications of the various embodiments described above. Accordingly, the present invention is defined by the claims and their equivalents.
the invention, fender **2304** is equipped with a detached top **2307** which can move freely from the rest of fender **2304.** Detached top **2307** is attached to the rest of fender **2304** by a spring **2306** internal to fender **2304;** spring **2306** has a point of attachment to fender **2304** at its lower end, in the interior of fender **2304.** In times of heavy force upon fender **2304** by a swell, spring **2304** serves to buffer the forces by allowing the top of the fender to partially separate temporarily until the stress is relieved. Detached fender top **2307** is then attached to a line **2305** that goes to the rest of the system. Alternatively, an internal spring **2306** may be used without detached top **2307,** in which case spring **2306** may be connected directly to line **2305.** It should be clear that the examples depicted in these figures are relatively simple configurations practical to clearly show the functional aspects of the system; other structures and parts such as but not limited to protective encasements, retainers, correct mounting hardware, drains, and guides are not depicted. Relative lengths or sizes of the parts are not meant to be to scale for operation.

In some embodiments, the rate of raising fender **1711** may be slowed when fender **1711** approaches an intermediate position; that is, intermediate between a deployed position and a stowed position. In a preferred embodiment, as fender **1711** just begins to enter the basket (e.g., basket **1701**), the rate of raising fender **1711** is reduced, to reduce the likelihood of fouling and to potentially reduce the impact resulting from any misalignment, fouling, or other problem. It will be recognized by one having ordinary skill in the art that various means of detecting when to change (e.g., reduce) the rate of raising of fender **1711** may be used according to the invention. For example, a time duration of raising may be used or, if a stepper motor is used, a count of the number of steps during the raising of fender **1711** may be used. Additionally, various switches, such as electromagnetic proximity switches of mechanical switches, may be placed so that they send a signal to the control system as fender **1711** passes, for example, the lower end of basket **1701** while being raised. In some embodiments, basket **1701** may be partially open, with a lower circumferential ring at its lowest opening, a partially closed cylindrical portion above this lower circumferential ring, and a fully closed upper portion. In such embodiments, lowering of the rate of raising of fender **1711** into basket **1701** would typically occur as the top of fender **1711** enters the lower ring of basket **1701.** Other variations are clearly possible, according to the invention, as will be appreciated by one having ordinary skill in the art.

The skilled person will be aware of a range of possible modifications of the various embodiments described above. Accordingly, the present invention is defined by the claims and their equivalents.

## Claims

1. A system (200) for automatically deploying at least one boat fender (713) to protect a boat's hull, comprising:
at least one fender receptacle (706), each said at least one fender receptacle configured to hold a boat fender in a stowed position and further configured to lower the boat fender from the stowed position into a deployed position capable of protecting the boat's hull;
wherein the at least one boat fender is attached to a line (712), the line being coupled to a winch (709), the winch being coupled to a motor (708); and
a system controller (704) comprising a plurality of software programming instructions stored in a memory and operating on a processor of a computing device;
wherein the system controller directs the operation of the motor, and wherein the system controller receives GPS information pertaining to the boat, and sets a height of fenders deployed at the location or indicates a requirement for input to raise or lower the boat fender, the prompt being based at least in part on the GPS information; and wherein the system controller, based upon input instructions, directs the motor to lower the boat fender to the deployed position when the boat arrives at a predetermined distance from a dock or raise the fender from the deployed position after the boat has departed a predetermined distance from the dock.

2. The system of claim 1, wherein the computing device is one of a smartphone and a tablet computing device.

3. The system of claim 1 or 2, wherein the system controller is installed and operates onboard a boat and is further configured to direct the operation of the or each motor automatically without user interaction, the operation being directed based at least in part on a plurality of stored operation instructions.

4. The system of any previous claim, wherein the system controller is configured to receive a plurality of GPS information and is configured to prompt a user for input, the prompt being based at least in part on at least a portion of the plurality of GPS information, and is configured to receive a plurality of user inputs, and is configured to store at least a portion of the received user input.

5. The system according to any one of claims 1 - 5, further comprising a motor control panel comprising a plurality of programming instructions stored in a memory and operation on a processor of a computing device and configured to direct the operation of a motor.

6. The system of claim 5, wherein the motor control panel is further configured to direct the operation of a plurality of controllers.

7. The system according to any one of claim 1 , wherein the computing device further comprises a mobile device comprising a processor, a memory, and an application comprising programmable instructions stored in the memory and operating on the processor, the application having access to a map system and the GPS system information, wherein the application may be used by a user to add a location used by a vessel for landing, and wherein the user may enter a mark representing a height of fenders deployed at the location.

8. The system of claim 7, wherein the application remembers a decision of the user whether or not and how to deploy fenders.

9. The system according to any one of claims 1 - 8, wherein upon retraction of the fender, the motor is configured to detect changes in current, and is configured to change its operation if an overcurrent state is detected, the overcurrent state detection being based at least in part on a configured current limit.

10. The system of claim 9, wherein upon a shutdown of the motor caused by a tangle in the line, the system attempts to detangle the line and achieve a full retraction, the detangling comprising line movement reversal.

11. The system of claim 10, wherein a camera (2101) in conjunction with visual recognition software is used to aid the detangling control of the line motion in addition to the current sensing.

12. The system of claim 10 or 11, wherein if fender retraction fails after the number of reversals, an alert is provided to an operator.

13. The system according to any one of claims 1 - 13, wherein the receptacle is one of a receptacle attached to a portion of the hull of the boat or an integrally-formed compartment in the hull of the boat.

14. A method of deploying at least one boat fender (713) to protect a boat's hull, in a system comprising:
at least one fender receptacle (706), each said at least one fender receptacle configured to hold a boat fender in a stowed position and further configured to lower the boat fender from the stowed position into a deployed position capable of protecting the boat's hull;
wherein at least one boat fender is attached to a line (712), the line being coupled to a winch (709), the winch being coupled to a motor (708); and a system controller (704) comprising a plurality of software programming instructions stored in a memory and operating on a processor of a computing device;
wherein the system controller directs the operation of the motor; and,
wherein the system controller receives GPS information pertaining to the boat, and sets height of fenders deployed at the location or prompts a user for input to raise or lower the boat fender, the prompt being based at least in part on the GPS information; and
wherein the system controller, based on the GPS information, directs the motor to lower the boat fender to the deployed position when the boat arrives at a predetermined distance from a dock.

## Patentansprüche

1. Ein System (200) für das automatische Ausfahren mindestens eines Bootsfenders (713) zum Schutz eines Bootsrumpfes, umfassend:
mindestens einen Fenderbehälter (706), jeder des mindestens einen Fenderbehälters ist konfiguriert, einen Bootsfender in einer verstauten Position zu halten und ferner konfiguriert, den Bootsfender aus der verstauten Position in eine ausgefahrene Position abzusenken, in der der Bootsrumpf geschützt werden kann;
wobei der mindestens eine Bootsfender an einer Leine (712) befestigt ist, die Leine ist mit einer Winde (709) verbunden, die Winde ist mit einem Motor (708) gekoppelt; und
ein Systemsteuergerät (704) umfasst eine Vielzahl von Softwareprogrammierungsanweisungen, die in einem Speicher abgelegt sind und in einem Prozessor eines Computergeräts ausgeführt werden;
wobei das Systemsteuergerät den Motorbetrieb steuert, und wobei das Systemsteuergerät GPS-Daten für das Boot empfängt, und eine Höhe der Fender einstellt, die am Standort ausgefahren werden, oder eine Eingabeaufforderung anzeigt, um den Bootsfender anzuheben oder abzusenken, die Eingabeaufforderung basiert, mindestens teilweise, auf den GPS-Daten; und wobei das Systemsteuergerät, auf Basis der Eingabeanweisungen, den Motor steuert, um den Bootsfender in die ausgefahrene Position abzusenken, wenn das Boot an einem vorbestimmten Abstand von einem Kai ankommt, oder den Fender aus der ausgefahrenen Position anzuheben, wenn das Boot einen vorbestimmten Abstand vom Kai erreicht hat.

2. Das System nach Anspruch 1, wobei das Computergerät entweder ein Smartphone oder ein Tablett-Computergerät ist.

3. Das System nach Anspruch 1 oder 2, wobei das Systemsteuergerät in einem Boot installiert ist und an Bord betrieben wird und ferner konfiguriert ist, den Betrieb des Motors oder jedes einzelnen Motors automatisch ohne Benutzerinteraktion zu steuern, der Betrieb wird mindestens teilweise auf der Grundlage einer Vielzahl von gespeicherten Betriebsanweisungen gesteuert.

4. Das System nach einem der vorhergehenden Ansprüche, wobei das Systemsteuergerät konfiguriert ist, eine Vielzahl von GPS-Daten zu empfangen, und konfiguriert ist, eine Eingabeaufforderung an einen Benutzer auszugeben, die Eingabeaufforderung basiert mindestens teilweise auf einem Teil der Vielzahl von GPS-Daten, und konfiguriert ist, eine Vielzahl von Benutzereingaben zu empfangen, und konfiguriert ist, mindestens einen Teil der empfangenen Benutzereingaben zu speichern.

5. Das System nach einem der Ansprüche 1 - 5, ferner umfassend eine Motor-Bedieneinheit, die eine Vielzahl von Programmierungsanweisungen umfasst, die in einem Speicher abgelegt sind und auf einem Prozessor eines Computergeräts ausgeführt werden, und das konfiguriert ist, den Betrieb eines Motors zu steuern.

6. Das System nach Anspruch 5, wobei die Motor-Bedieneinheit ferner konfiguriert ist, den Betrieb einer Vielzahl von Steuergeräten zu steuern.

7. Das System nach Anspruch 1, wobei das Computergerät ferner ein Mobilgerät umfasst, das einen Prozessor, einen Speicher und eine Anwendung mit programmierbaren Anweisungen umfasst, die im Speicher abgelegt sind und im Prozessor ausgeführt werden, die Anwendung hat Zugang zu einem Kartensystem und zu den GPS-Systemdaten, wobei die Anwendung von einem Benutzer eingesetzt werden kann, um einen Standort hinzuzufügen, der von einem Wasserfahrzeug für das Anlegen genutzt wird, und wobei der Benutzer eine Markierung eingeben kann, die eine Höhe der Fender, die am Standort ausgefahren werden, repräsentiert.

8. Das System nach Anspruch 7, wobei sich die Anwendung an eine Entscheidung des Benutzers erinnert, ob oder ob nicht und wie die Fender ausgefahren werden.

9. Das System nach einem der Ansprüche 1 - 8, wobei beim Einfahren des Fenders, der Motor konfiguriert ist, Stromschwankungen zu erfassen, und konfiguriert ist, seinen Betrieb zu verändern, wenn ein Überstromzustand festgestellt wird, die Erfassung des Überstroms basiert mindestens teilweise auf einer konfigurierten Strombegrenzung.

10. Das System nach Anspruch 9, wobei beim Abschalten des Motors, das von einer Verwicklung der Leine verursacht wird, das System versucht, die Leine zu entwirren und eine vollständige Aufwicklung zu erreichen, das Entwirren umfasst dabei eine Umkehrung der Leinenbewegung.

11. Das System nach Anspruch 10, wobei eine Kamera (2101) in Verbindung mit einer visuellen Erkennungssoftware eingesetzt wird, um die Entwirrungssteuerung der Leinenbewegung zusätzlich zur Strommessung zu unterstützen.

12. Das System nach Anspruch 10 oder 11, wobei einem Bediener ein Alarm angezeigt wird, wenn das Einfahren des Fenders nach der Anzahl an Umkehrungsversuchen fehlschlägt.

13. Das System nach einem der Ansprüche 1 - 13, wobei der Behälter entweder ein Behälter ist, der an einem Rumpfteil des Bootes angebracht oder ein fest im Bootsrumpf eingebautes Fach ist.

14. Ein Verfahren zum Ausfahren mindestens eines Bootsfenders (713), um einen Bootsrumpf zu schützen, in einem System, das Folgendes umfasst:
Mindestens einen Fenderbehälter (706), jeder des mindestens einen Fenderbehälters ist konfiguriert, einen Bootsfender in einer verstauten Position zu halten und ferner konfiguriert, den Bootsfender aus der verstauten Position in eine ausgefahrene Position abzusenken, in der der Bootsrumpf geschützt werden kann;
wobei mindestens ein Bootsfender an einer Leine (712) befestigt ist, die Leine ist mit einer Winde (709) verbunden, die Winde ist mit einem Motor (708) gekoppelt; und ein Systemsteuergerät (704) umfasst eine Vielzahl von Softwareprogrammierungsanweisungen, die in einem Speicher abgelegt sind und in einem Prozessor eines Computergeräts ausgeführt werden;
wobei das Systemsteuergerät den Motorbetrieb steuert, und
wobei das Systemsteuergerät GPS-Daten für das Boot empfängt, und eine Höhe der Fender einstellt, die am Standort ausgefahren werden, oder eine Benutzereingabeaufforderung anzeigt, um den Bootsfender anzuheben oder abzusenken, die Eingabeaufforderung basiert, mindestens teilweise, auf den GPS-Daten; und
wobei das Systemsteuergerät, auf Basis der GPS-Daten, den Motor steuert, um den Bootsfender in die ausgefahrene Position abzusenken, wenn das Boot an einem vorbestimmten Abstand von einem Kai ankommt.

## Revendications

1. Système (200) destiné au déploiement automatique d'au moins une défense de bateau (713) pour protéger une coque de bateau, comprenant :
au moins un logement de défense (706), chacun d'au moins un logement de défense conçu pour maintenir une défense de bateau dans une position rentrée et conçu en outre pour abaisser la défense de bateau à partir de la position rentrée dans une position déployée permettant d'assurer la protection de la coque de bateau ;
dans lequel ladite au moins une défense de bateau est fixée à la ligne (712), la ligne étant accouplée à un treuil (709), le treuil étant accouplé à un moteur (708) ; et
un contrôleur de système (704) comprenant une pluralité d'instructions de programmation de logiciel mémorisées dans une mémoire et fonctionnant sur un processeur du dispositif informatique ;
dans lequel le contrôleur de système dirige le fonctionnement du moteur et dans lequel le contrôleur de système reçoit des informations GPS se rapportant au bateau et règle une hauteur des défenses déployées à l'emplacement ou indique une exigence pour une entrée pour relever ou abaisser la défense de bateau, l'invite étant basée au moins en partie sur les informations GPS ; et dans lequel le contrôleur de système, sur la base des instructions d'entrée, dirige le moteur pour abaisser la défense de bateau à la position déployée lorsque le bateau arrive à une distance prédéfinie à partir d'un quai ou relever la défense depuis la position déployée après que le bateau a quitté une distance prédéfinie à partir du quai.

2. Système selon la revendication 1, dans lequel le dispositif informatique est l'un parmi un téléphone intelligent et un dispositif informatique de tablette.

3. Système selon la revendication 1 ou 2, dans lequel le contrôleur de système est installé et fonctionne à bord d'un bateau et est conçu en outre pour diriger le fonctionnement du ou de chaque moteur automatiquement sans interaction de l'utilisateur, le fonctionnement étant dirigé en fonction au moins en partie d'une pluralité d'instructions de fonctionnement mémorisées.

4. Système selon une quelconque revendication précédente, dans lequel le contrôleur de système est conçu pour recevoir une pluralité d'informations GPS et est conçu pour inviter un utilisateur à réaliser une entrée, l'invite étant basée au moins en partie sur au moins une partie de la pluralité d'informations GPS et est conçue pour recevoir une pluralité d'entrées d'utilisateur et est conçue pour mémoriser au moins une partie de l'entrée d'utilisateur reçue.

5. Système selon l'une quelconque des revendications 1 à 5, comprenant en outre un panneau de commande de moteur comprenant une pluralité d'instructions de programmation mémorisées dans une mémoire et le fonctionnement d'un processeur sur un dispositif informatique et conçu pour diriger le fonctionnement d'un moteur.

6. Système selon la revendication 5, dans lequel le panneau de commande de moteur est conçu en outre pour diriger le fonctionnement d'une pluralité de contrôleurs.

7. Système selon la revendication 1, dans lequel le dispositif informatique comprend en outre un dispositif mobile comprenant un processeur, une mémoire et une application comprenant des instructions programmables mémorisées dans la mémoire et fonctionnant sur le processeur, l'application ayant accès à un système de cartes et aux informations du système GPS, dans lequel l'application peut être utilisée par un utilisateur pour ajouter un emplacement utilisé par un navire pour le débarquement et dans lequel l'utilisateur peut entrer une marque représentant une hauteur des défenses déployées à l'emplacement.

8. Système selon la revendication 7, dans lequel l'application se rappelle d'une décision de l'utilisateur si oui ou non et comment déployer les défenses.

9. Système selon l'une quelconque des revendications 1 à 8, dans lequel sous l'effet de la rétraction de la défense, le moteur est conçu pour détecter des changements dans le courant et est conçu pour modifier son fonctionnement si un état de courant excessif est détecté, la détection de l'état de courant excessif étant basée au moins en partie sur une limite de courant configurée.

10. Système selon la revendication 9, dans lequel sous l'effet d'un arrêt du moteur provoqué par un enchevêtrement dans la ligne, le système tente de désenchevêtrer la ligne et d'achever une rétraction complète, le désevenchevêtrement comprenant l'inversion du mouvement de la ligne.

11. Système selon la revendication 10, dans lequel une caméra (2101) conjointement avec le logiciel de reconnaissance visuelle est utilisée pour aider au contrôle de désevenchevêtrement de la ligne du mouvement de la ligne en plus de la détection de courant.

12. Système selon la revendication 10 ou 11, dans lequel si la rétraction de la défense échoue après les nombreuses inversions, une alerte est fournie à un opérateur.

13. Système selon l'une quelconque des revendications 1 à 13, dans lequel le logement est l'un parmi un logement fixé à une partie de la coque du bateau ou un compartiment formé d'une seule partie dans la coque du bateau.

14. Procédé de déploiement automatique d'au moins une défense de bateau (713) pour protéger une coque de bateau, dans un système comprenant :
au moins un logement de défense (706), chacun dudit au moins un logement de défense conçu pour retenir une défense de bateau dans une position rentrée et conçu en outre pour abaisser la défense de bateau à partir de la position rentrée dans une position déployée permettant d'assurer la protection de la coque de bateau ;
dans lequel au moins une défense de bateau est fixée à la ligne (712), la ligne étant accouplée à un treuil (709), le treuil étant accouplé à un moteur (708) ; et un contrôleur de système (704) comprenant une pluralité d'instructions de programmation de logiciel mémorisées dans une mémoire et fonctionnant sur un processeur du dispositif informatique;
dans lequel le contrôleur de système dirige le fonctionnement du moteur ; et,
dans lequel le contrôleur de système reçoit des informations GPS se rapportant au bateau et règle la hauteur des défenses déployées à l'emplacement ou invite un utilisateur à réaliser une entrée pour relever ou abaisser la défense de bateau, l'invite étant basée au moins en partie sur les informations GPS ; et
dans lequel le contrôleur de système, sur la base des informations GPS, dirige le moteur pour abaisser la défense de bateau à la position déployée lorsque le bateau arrive à une distance prédéfinie à partir d'un quai.
